# EUROPÄISCHE PATENTSCHRIFT

(11) **EP 3 041 992 B1**
(45) Veröffentlichungstag und Bekanntmachung des Hinweises auf die Patenterteilung: **10.01.2018**
(21) Anmeldenummer: 14753056.2
(22) Anmeldetag: 15.08.2014
(51) Int. Cl.: E01B 27/00, B61D 15/00, B61D 7/32

(54) **MATERIALUMSCHLAGWAGEN**
MATERIAL HANDLING VEHICLE
CHARIOT DE MANUTENTION DE MATÉRIAUX

(30) Priorität: 02.09.2013 EP 13182602
(43) Veröffentlichungstag der Anmeldung: 13.07.2016
(73) Patentinhaber: Sersa Maschineller Gleisbau AG, 8307 Effretikon (CH)
(72) Erfinder: MANHART, Matthias, CH-8312 Winterberg (CH)
(74) Vertreter: Frischknecht, Harry Ralph
(86) Internationale Anmeldenummer: PCT/EP2014/067507
(87) Internationale Veröffentlichungsnummer: WO 2015/028321

(56) Entgegenhaltungen:
- EP-A1- 0 419 423
- DE-A1- 2 146 590

## Beschreibung

### TECHNISCHES GEBIET

Die vorliegende Erfindung betrifft einen Materialumschlagwagen für einen Bauzug nach dem Oberbegriff von Anspruch 1, sowie ein Verfahren zum Betrieb eines Materialumschlagwagens nach Anspruch 14.

### STAND DER TECHNIK

Aus dem Stand der Technik sind Materialumschlagwagen für den Umschlag von Schüttgütern (Schotter, Sand, Kies, Erde etc.) im Bereich von Gleisanlagen bekannt. Diese Materialumschlagwagen umfassen typischerweise einen Rahmen, auf dessen unteren Seite die Drehgestelle mit den Rädern angeordnet sind. Auf der Oberseite des Rahmens sind die Komponenten für den Materialumschlag angeordnet. Diese Komponenten umfassen typischerweise ein Förderband, welches oberhalb der Rahmenoberseite liegt und um eine Achse rechtwinklig zur Rahmenoberseite verschwenkbar ist. Das Förderband ist durch weitere Einrichtungen Schüttgut beschickbar, wobei das Schüttgut dann neben dem Eisenbahnwagen in ein zu befüllendes Schotterbeet oder in einen Eisenbahnwagen abgeladen wird. Man spricht hier von einem Querverlad.
Auch wenn in Bauzügen mit derartigen Eisenbahnwagen sehr gute Resultate erzielt wurden, ist der Aufwand zum Zusammenstellen von diesen Bauzügen sehr hoch. Auch muss der Bauzug je nach Einsatz oftmals umgestellt oder umgebaut werden, was sehr aufwendig und in der Praxis auch nicht immer möglich ist.

DE-A-2146590 offenbart einen gattungsgemäßen Materialumschlagwagen für den Umschlag von Schüttgut, umfassend einen Rahmen, mindestens zwei mit dem Rahmen in Verbindung stehende Laufwerke, und eine obere sowie eine untere Förderbahneinheit.

### DARSTELLUNG DER ERFINDUNG

Ausgehend von diesem Stand der Technik liegt der Erfindung eine Aufgabe zugrunde, einen Materialumschlagwagen anzugeben, welcher flexibler einsetzbar ist.

Diese Aufgabe löst der Gegenstand nach Anspruch 1. Demgemäss umfasst ein Materialumschlagwagen für den Umschlag von Schüttgut, insbesondere von Schotter, einen Rahmen, welcher Rahmen sich in eine Längsrichtung und eine Querrichtung ausdehnt und eine Rahmenebene mit einer Oberseite und einer Unterseite aufspannt, mindestens zwei mit dem Rahmen in Verbindung stehende Laufwerke, und eine obere Förderbahneinheit, welche oberseitig der Rahmenebene angeordnet ist. Die obere Förderbandeinheit ist also auf der Oberseite des Rahmens angeordnet. Weiter umfasst der Materialumschlagwagen eine untere Förderbahneinheit, welche unterseitig der Rahmenebene angeordnet ist. Die untere Förderbahneinheit ist auf der Unterseite des Rahmens angeordnet.

Durch die Anordnung von einer Förderbahneinheit auf der Oberseite des Rahmens und einer Förderbahneinheit auf der Unterseite des Rahmens kann ein Materialumschlagwagen angegeben werden, welcher sehr flexibel einsetzbar ist. Je nach Stellung der Förderbahneinheiten können unterschiedlichste Arbeitsschritte mit dem gleichen Materialumschlagwagen durchgeführt werden. Hierdurch wird die Flexibilität erhöht. Insbesondere entfällt eine aufwändige Umstellung von einzelnen Wagen in einem Bauzug. Die Effizienz des Bauzuges kann erhöht werden.

Mit der oberen Förderbahneinheit lässt sich beispielsweise Schüttgut auf einen Wagen, der seitlich neben dem Materialumschlagwagen steht, umladen oder ein benachbart zum Trassee liegender Bereich mit Schüttgut versehen. Mit der unteren Förderbahneinheit ist direkter Ablad ins eigene Trasse oder ein Querablad in ein seitlich neben dem Materialumschlagwagen liegendes Trassee möglich.

Die obere Förderbahneinheit und die untere Förderbahneinheit sind dabei an einem gemeinsamen Rahmen, welcher die Basis des Materialumschlagwagens bildet, angeordnet. Mit anderen Worten gesagt sind die beiden Förderbahneinheiten an einem gemeinsamen Materialumschlagwagen angeordnet.

Die Laufwerke sind beispielsweise Drehgestelle.

Die untere Förderbahneinheit umfasst mindestens ein Förderband, vorzugsweise mindestens zwei, insbesondere genau zwei Förderbänder. Die Förderbänder sind von einer Ausgangsstellung um winklig, insbesondere senkrecht, zur Rahmenebene stehende Schwenkachsen relativ zum Rahmen in eine Verschwenkstellung verschwenkbar.

Die Förderbänder der unteren Förderbandeinheit sind vorzugsweise identisch zueinander ausgebildet.

Vorzugsweise sind die Förderbänder der unteren Förderbandeinheit zusätzlich zur Unterseite der Rahmenebene verschwenkbar. Somit kann also der Winkel zwischen den Förderbändern und der Rahmenebene eingestellt werden.

Vorzugsweise erstrecken sich die Förderbänder der unteren Förderbandeinheit in ihrer Ausgangsstellung in Längsrichtung und können dann um die besagten Schwenkachse verschwenkt werden, so dass die Förderbänder in der Verschwenkstellung winklig zur Längsrichtung liegen. Vorzugsweise sind die Förderbänder bis zu 90° zur Längsrichtung verschwenkbar.

In einer besonders bevorzugten Ausführungsform ist bezüglich der Längsrichtung jeweils ein Förderband links vom Rahmen und ein anderes Förderband ist rechts von Rahmen angeordnet. Somit lassen sich gleichzeitig oder wahlweise Bereiche links und rechts vom Materialumschlagwagen mit dem Schüttgut beschicken.

Besonders bevorzugt sind die Förderbänder der unteren Förderbahneinheit in ihrer Länge veränderbar ausgebildet. Die Förderbänder sind also teleskopisch. Somit kann das Schüttgut besonders genau abgeladen werden. Alternativ kann durch den Winkel der Förderbänder zum Rahmen und durch die Vorfahrgeschwindigkeit die Abladeposition des Schüttguts ebenfalls definiert werden.

Vorzugsweise liegen die Förderbänder in der Ausgangsstellung innerhalb des Lichtraumprofils des Materialumschlagwagens bzw. des Rahmens in Längsrichtung gesehen und in der Verschwenkstellung liegen die Förderbänder ausserhalb des Lichtraumprofils. In der Ausgangsstellung ragen also die Förderbänder nicht über das Lichtraumprofil hinaus, wodurch ein sicherer Transport ermöglicht wird. Erfindungsgemäß umfasst der Materialumschlagwagen weiter mindestens eine Siloeinheit. Nach einer Ausführung umfasst die Siloeinheit mindestens ein Abgabeschacht, wobei die Siloeinheit von der oberen Förderbahneinheit beschickbar ist. Der mindestens eine Abgabeschacht mündet in Bereiche unterhalb des Rahmens, beispielsweise auf die untere Förderbahneinheit und/oder direkt auf das Trassee. In einer anderen Ausführung umfasst die Siloeinheit mindestens zwei in Längsrichtung gesehen versetzt zueinander angeordnete Abgabeschächte und ist von der oberen Förderbahneinheit beschickbar. Einer der Abgabeschächte ist auf die untere Förderbahneinheit gerichtet und der andere der Abgabeschächte mündet direkt in Bereiche bzw. auf das Trassee unterhalb des Rahmens mündet. Das Trassee ist dabei das Trassee, auf welchem der Materialumschlagwagen steht. Die Abgabeschächte umfassen bevorzugt mindestens eine Klappe, welche verschliessbar und öffnenbar ist, so dass das Schüttgut dosiert entnehmbar ist.
Alternativ kann die Siloeinheit auch nur ein Abgabeschacht umfassen, welcher von der oberen Förderbahneinheit beschickbar ist und auf die untere Förderbahneinheit gerichtet ist.
Vorzugsweise umfasst die Siloeinheit ein Ablenkungselement, insbesondere eine Klappe, welche das Schüttgut wahlweise in den einen oder den anderen der Abgabeschächte leitet. Durch das Ablenkungselement kann wahlweise der eine oder der andere der Abgabeschächte mit dem Schuttgut beschickt werden.
Vorzugsweise weist der Rahmen einen Durchbruch auf, durch welchen sich die Siloeinheit, insbesondere die Abgabschächte von der Oberseite des Rahmens durch den Rahmen hindurch erstrecken bzw. in welchen die Siloeinheit von der Oberseite des Rahmens münden. Der Durchbruch ragt dabei von der Oberseite des Rahmens zu dessen Unterseite durch den Rahmen hindurch.
Besonders bevorzugt umfasst die Siloeinheit insgesamt vier Abgabeschächte, welche zueinander in Längsrichtung und Querrichtung versetzt sind. Zwei in Längsrichtung auf gleicher Höhe liegende Abgabeschächte sind auf die untere Förderbandeinheit, die unterhalb der Rahmenebene liegt, gerichtet. Zwei weitere in Längsrichtung ebenfalls auf gleicher Höhe liegende Abgabeschächte sind auf das Trassee gerichtet. Erfindungsgemäß umfasst die obere Förderbandeinheit ein Beschickungsförderband und mindestens ein Abladeförderband, wobei das Beschickungsförderband entlang der Längsrichtung auf der Oberseite des Rahmens verschiebbar ist und so wahlweise das Abladeförderband oder die mindestens eine Siloeinheit beschickbar sind.
Vorzugsweise steht die Siloeinheit fest mit dem Rahmen in Verbindung. Das Beschickungsförderband ist relativ zum Rahmen und somit zur Siloeinheit verschiebbar, wobei das Beschickungsförderband vorzugsweise mindestens teilweise oberhalb der Siloeinheit liegt und über die Siloeinheit hinweg bewegbar ist.
Vorzugsweise liegen die Trichtereinheiten zwischen dem Beschickungsförderband und dem Abladeförderband.
Besonders bevorzugt ist das Abladeförderband von einer Ausgangsstellung um eine winklig, insbesondere senkrecht, zur Rahmenebene stehende Schwenkachse in eine Verschwenkstellung verschwenkbar, wobei das Abladeförderband in der Ausgangsstellung innerhalb des Lichtraumprofils des Materialumschlagwagens in Längsrichtung gesehen liegt und wobei das Abladeförderband in Verschwenkstellung ausserhalb des Lichtraumprofils liegt.
Das Abladeförderband weist vorzugsweise eine Breite von 1.8 bis 2.2 Metern, besonders bevorzugt von 2 Metern auf. Auch das Beschickungsförderband weist vorzugsweise eine Breite in dem besagten Bereich auf.
Das Abladeförderband kann im Uhrzeigersinn und im Gegenuhrzeigersinn um die besagte Schwenkachse verschwenkt werden, so dass es einerseits links und andererseits rechts vom Materialumschlagwagen zu liegen kommt. Vorzugsweise ist das Abladeförderband um einen Winkel von 90° zur Ausgangsstellung verschwenkbar.

Vorzugsweise stehen sowohl das Beschickungsförderband und auch das Abladeförderband sowohl in Ausgangsstellung als auch in Verschwenkstellung geneigt oder winklig zur Oberseite bzw. zur Rahmenebene stehen. Besonders bevorzugt lässt sich die Neigung des Förderbandes zur Rahmenebene einstellen. Das heisst, dass das Beschickungsförderband und das Abladeförderband relativ zur Rahmenebene verschwenkbar sind.

Nach dem Verfahren zum Betrieb eines Materialumschlagwagens nach obiger Beschreibung wird erfindungsgemäß wahlweise die untere Förderbandeinheit für den Querablad von der Ausgangsstellung in die Verschwenkstellung verschwenkt, wobei die obere Förderbandeinheit den Schotter ggf. über die Siloeinheit der unteren Förderbandeinheit zuführt.

Nach dem Verfahren zum Betrieb eines Materialumschlagwagens nach obiger Beschreibung wird erfindungsgemäß wahlweise die obere Förderbändereinheit für den Querablad von der Ausgangsstellung in die Verschwenkstellung verschwenkt wobei die untere Förderbandeinheit in der Ausgangsstellung verbleibt.

Nach dem Verfahren zum Betrieb eines Materialumschlagwagens nach obiger Beschreibung werden erfindungsgemäß wahlweise die untere Förderbandeinheit für den Längsablad von der Ausgangsstellung in die Verschwenkstellung verschwenkt oder verbleiben in Ausgangsstellung, wobei die obere Förderbandeinheit den Schotter ggf. über die Siloeinheit der unteren Förderbandeinheit zuführt.

Nach dem Verfahren zum Betrieb eines Materialumschlagwagens nach obiger Beschreibung wird erfindungsgemäß die Siloeinheit mit der oberen Förderbandeinheit beschickt und ohne Kontakt mit der unteren Förderbandeinheit gegen das Trassee gerichtet. Das Trassee wird also direkt und ohne Interaktion mit der unteren Förderbandeinheit beschickt.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine Perspektivansicht einer Ausführungsform des erfindungsgemässen Materialumschlagwagens;
- Fig. 2: eine weitere Perspektivansicht des Materialumschlagwagens nach Figur 1;
- Fig. 3: eine Seitenansicht des Materialumschlagwagens nach den vorhergehenden Figuren in der Transportstellung;
- Fig. 4: eine Draufsicht auf den Materialumschlagwagen nach Figur 3;
- Fig. 5: eine Seitenansicht des Materialumschlagwagens nach den vorhergehenden Figuren in der oberen Querabladstellung;
- Fig. 6: eine Draufsicht auf den Materialumschlagwagen nach Figur 5;
- Fig. 7: eine Seitenansicht des Materialumschlagwagens nach den vorhergehenden Figuren in der Verschwenkstllung;
- Fig. 8: eine Draufsicht auf den Materialumschlagwagen nach Figur 7;
- Fig. 9: eine Seitenansicht des Materialumschlagwagens nach den vorhergehenden Figuren in der Verschwenkstllung; und
- Fig. 10: eine Draufsicht auf den Materialumschlagwagen nach Figur 9.

### BESCHREIBUNG BEVORZUGTER AUSFÜHRUNGSFORMEN

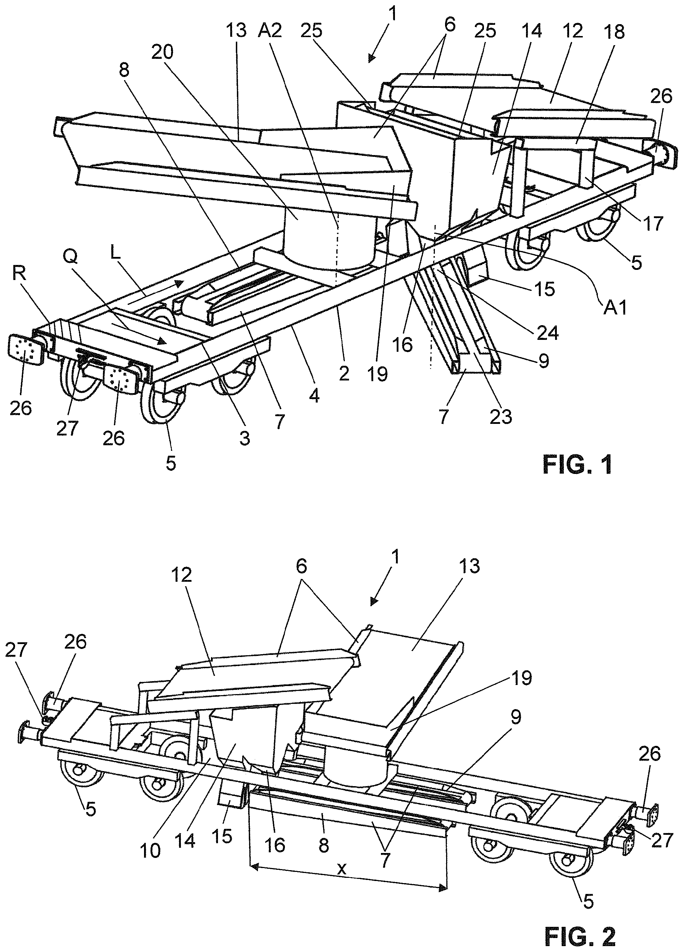

In den Figuren 1 und 2 werden perspektivische Ansichten eines Materialumschlagwagen 1 für den Umschlag von Schüttgut, insbesondere von Schotter, gezeigt. Solche Materialumschlagwagen 1 werden typischerweise im Verbund mit anderen Wagen in einen Bauzug eingesetzt. Der Bauzug dient der Sanierung oder Neuerstellung von Eisenbahntrassees.

Der Materialumschlagwagen 1 umfasst einen Rahmen 2, mindestens zwei mit dem Rahmen 2 in Verbindung stehende Laufwerke 5 und eine obere Förderbahneinheit 6, welche mit dem Rahmen 2 in Verbindung steht. Weiter umfasst der Materialumschlagwagen 1 eine untere Förderbahneinheit 7, welche ebenfalls mit dem Rahmen 2 in Verbindung steht.

Der Rahmen 2 erstreckt sich in eine Längsrichtung L und eine Querrichtung Q. Der Rahmen 2 spannt eine Rahmenebene R, welche in der Figur 1 symbolisch dargestellt ist, auf. Die Rahmenebene R weist eine Oberseite 3 und eine Unterseite 4 auf. Die Oberseite 3 bildet hier die Oberseite des Rahmens 2. Die Unterseite 4 des Rahmens 2 liegt hier beabstandet zur Rahmenebene R. Die Rahmenebene R kann bezüglich des Rahmens 2 auch auf einer anderen Höhe im Rahmen 2 liegen und wird im Wesentlichen für die Definition der Anordnung der einzelnen Komponenten am Rahmen 2 eingeführt. Die Rahmenebene R bzw. der Rahmen 2 bzw. die Längsrichtung L und die Querrichtung Q liegen im Einsatz des Materialumschlagwagens 1 parallel zum Boden, insbesondere zu den Gleisen, wo der Materialumschlagwagen 1 steht bzw. rollt.
Die obere Förderbahneinheit 6 ist oberseitig der Rahmenebene R bzw. auf der Oberseite 3 des Rahmens 2 angeordnet. Die untere Förderbahneinheit 7 ist unterseitig der Rahmenebene R bzw. auf der Unterseite 4 des Rahmens 2 angeordnet. Mit anderen Worten gesagt ist die obere Förderbahneinheit 6 oberhalb des Rahmens 2 und die untere Förderbahneinheit 7 unterhalb des Rahmens 2 angeordnet. Im Betrieb kann wahlweise oder kombiniert mit der oberen Förderbahneinheit 6 und/oder der unteren Förderbahneinheit 7 gearbeitet werden.

Die untere Förderbahneinheit 7 umfasst in der vorliegenden Ausführungsform zwei Förderbänder 8, 9. In anderen Ausführungsformen umfasst die Förderbahneinheit 7 mindestens ein Förderband, bevorzugt mindestens zwei Förderbänder 8, 9. Die Förderbänder 8, 9 sind von einer Ausgangsstellung um eine winklig, insbesondere senkrecht, zur Rahmenebene R stehenden Schwenkachsen A1 relativ zum Rahmen 2 in eine Verschwenkstellung verschwenkbar. In der Figur 1 befindet sich das Förderband 8 in der Ausgangsstellung und das Förderband 9 in der Verschwenkstllung. Jedem der Förderbänder 8, 9 der unteren Förderbahneinheit 7 ist dabei eine Schwenkachse zugeordnet. Sowohl in der Ausgangsstellung als auch in der Verschwenkstellung lassen sich die Förderbänder 8, 9 zur Verteilung von Schüttgut einsetzen, wie dies dann weiter unten erläutert wird.
Die Förderbänder 8, 9 werden mit dem Schüttgut beschickt und transportieren dann das Schüttgut über eine Abwurfkante 23 zum Zielort. Die Abwurfkante 23 bildet das vordere Ende des entsprechenden Förderbandes 8, 9. Gegenüberliegend der Abwurfkante 23 werden die Förderbänder 8, 9 an einer Beschickungsstelle 24 mit dem Schüttgut beschickt. Die Förderbänder 8, 9 der unteren Förderbahneinheit 7 sind optional zur Unterseite 4 der Rahmenebene R verschwenkbar. Mit anderen Worten gesagt lassen sich die Förderbänder 8, 9 bezüglich der Rahmenebene R relativ verschwenken, so dass die Förderbänder 8, 9 winklig bzw. geneigt zur Rahmenebene R liegen.

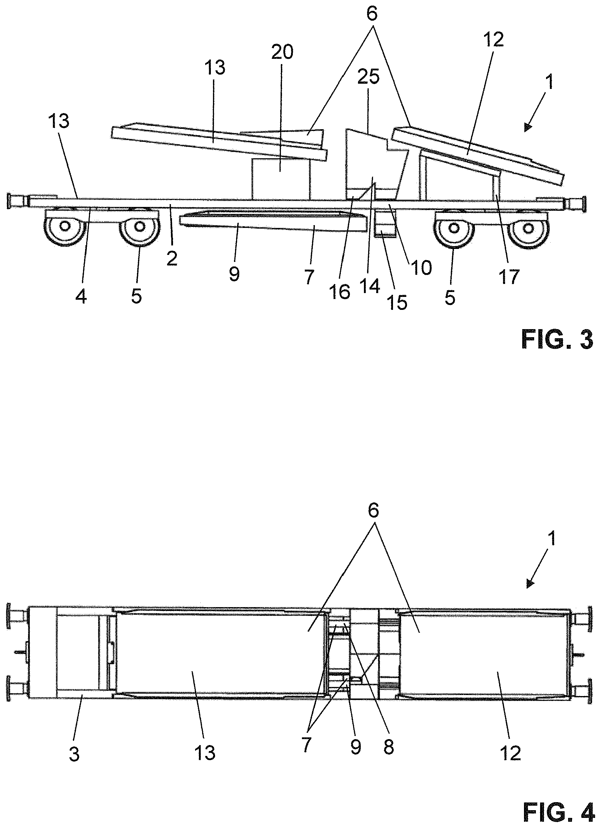

In den Figuren 3 und 4 werden die Förderbänder 8, 9 der unteren Förderbahneinheit 7 in ihrer Ausgangsstellung gezeigt. In der Ausgangsstellung erstrecken sich die Förderbänder 8, 9 in Längsrichtung. Die Förderbänder 8, 9 sind dabei derart angeordnet, dass sich diese in Ausgangsstellung nicht über das Lichtraumprofil des Materialumschlagwagens 1 in Längsrichtung L gesehen, erstrecken. Wird der Materialumschlagwagen 1 im Verbund mit dem Bauzug zu einer Baustelle transportiert, so befinden sich die Förderbänder 8, 9 in der Ausgangsstellung. Das Lichtraumprofil definiert sich im Wesentlichen durch die Ausdehnung des Materialumschlagwagens 1 in Querrichtung Q.
In der besonders bevorzugten Ausführungsform sind genau zwei Förderbänder 8, 9 angeordnet, wobei jeweils ein Förderband 8 links am Rahmen 2 und ein anderes Förderband 9 rechts am Rahmen 2 angeordnet ist.
Vorzugsweise sind die Förderbänder 8, 9 der unteren Förderbahneinheit 7 in ihrer Länge X veränderbar ausgebildet. Die Förderbänder 8, 9 lassen sich also teleskopieren.
Weiter umfasst der Materialumschlagwagen 1 mindestens eine Siloeinheit 14. Die Siloeinheit 14 umfasst hier zwei in Längsrichtung L gesehen versetzt zueinander angeordnete Abgabeschächte 15, 16, über welche das Schüttgut, vorzugsweise wahlweise, abgebbar ist. Die Siloeinheit 14 kann aber auch nur ein oder mindestens ein Abgabeschacht umfassen.
Die Siloeinheit 14 ist von der oberen Förderbahneinheit 6 beschickbar. Die obere Förderbahneinheit 6 führt also das Schüttgut der Siloeinheit 14 zu. Das Schüttgut gelangt über eine obere Öffnung 25 in die Siloeinheit 14. Über die Abgabeschächte 15, 16 kann dann das Schüttgut von der Siloeinheit 14 entsprechend abgegeben werden. Einer der beiden Abgabeschächte 16 ist dabei auf die untere Förderbahneinheit 7 gerichtet. Das heisst, die Förderbänder 8, 9 der unteren Förderbahneinheit 7 liegen unterhalb des Abgabeschachts 16, wobei diese Förderbänder 8, 9 über den Abgabeschacht 16 mit dem Schüttgut beschickt werden. Der andere der Abgabeschächte 15 mündet im Bereich unterhalb des Rahmens 2 und liegt frei, derart dass das Schüttgut über den Abgabeschacht 15 direkt auf das Trassee gegeben werden kann. Der Abgabeschacht 15 ist also nicht auf die Förderbahneinheit 7 gerichtet.

Für die Steuerung des Schüttgutes innerhalb der Siloeinheit 14 umfasst die Siloeinheit 14 mindestens ein Ablenkungselement, insbesondere eine Klappe, welches das Schüttgut wahlweise in den einen oder in den anderen der beiden Abgabeschächte 15, 16 leitet. Andere Mittel für die Zuweisung des Schüttgutes können auch vorgesehen sein. Weiter wäre es zudem möglich, dass die Siloeinheit 14 getrennt ausgebildet ist, so dass die Siloeinheit zwei verschiedene Kammern aufweist, wobei die eine Kammer den einen der Abgabeschächte und die andere Kammer dem anderen der Abgabeschächten zugeordnet ist, so dass je nach Befüllung das Schüttgut den entsprechenden Abgabeschächten 14, 15 zugewiesen werden kann.

Der Rahmen 2 weist im Bereich der Siloeinheit 14 einen Durchbruch 10 auf. Der Durchbruch 10 erstreckt sich hier über grössere Teile des Rahmens 2. Über diesen Durchbruch 10 kann das Schüttgut von der Siloeinheit von der Oberseite 3 des Rahmens, also von oberhalb der Rahmenebene R, zur Unterseite 4 des Rahmens 2 gebracht werden.

In der vorliegenden Ausführungsform erstrecken sich Teile der Siloeinheit 14 durch den Rahmen 2 hindurch. Insbesondere erstrecken sich hier die beiden Abgabeschächte 15, 16 von der Oberseite 3 des Rahmens 2 durch den Rahmen 2 hindurch und ragen bis zur Unterseite 4 des Rahmens 2, wo dann die entsprechenden Abgabestellen sind.

In der vorliegend gezeigten Ausführungsform umfasst die Siloeinheit insgesamt vier Abgabeschächte 15, 16, welche zueinander in Längsrichtung L und in Querrichtung Q versetzt sind. Zwei der Abgabeschächte, die Abgabeschächte mit dem Bezugszeichen 15, sind gegen das Trassee gerichtet. Zwei weitere der Abgabeschächte, hier die Abgabeschächte 16, sind auf die Förderbänder 8, 9 der unteren Förderbahneinheit 7 gerichtet.

Die obere Förderbahneinheit 6, welche auf der Oberseite 3 des Rahmens 2 bzw. oberseitig der Rahmenebene R des Rahmens 2 angeordnet ist, umfasst ein Beschickungsförderband 12 und mindestens ein Abladeförderband 13.
Das Beschickungsförderband 12 dient der Beschickung von verschiedenen Komponenten des Materialumschlagwagens 1. Einerseits dient das Beschickungsförderband 12 der Beschickung der Siloeinheit 14. Andererseits dient das Beschickungsförderband 12 der Beschickung des Abladeförderbandes 13. Das Beschickungsförderband 12 ist dabei entlang der Längsrichtung L als Ganzes bezüglich des feststehenden Rahmens 2 verschiebbar. In der Figur 1 wird das Beschickungsförderband 12 so gezeigt, dass dieses die Siloeinheit 14 beschickt. In der Figur 2 ist das Beschickungsförderband 12 in Längsrichtung L gesehen versetzt von der Position in der Figur 1 angeordnet und ist so positioniert, dass das Abladeförderband 13 beschickt werden kann. Das Beschickungsförderband 12 wird im Betrieb mit entsprechendem Schüttgut von weiteren Maschinen, wie bspw. einem Bagger oder einem Silowagen beschickt.
Das Beschickungsförderband 12 ist hier auf einer Trägerstruktur 17 gelagert. Über diese Trägerstruktur 17 lässt sich das Beschickungsförderband 12 entlang der Längsrichtung verschieben. Die Trägerstruktur 17 weist hier eine geneigt zur Rahmenebene R ausgerichtete Führungsbahn 18 auf. Über diese Führungsbahn 18 steht das Beschickungsförderband 12 bewegbar mit der Trägerstruktur 17 in Verbindung.
In allgemeinen Worten gesagt lässt sich das Beschickungsförderband 12 entlang der Längsrichtung L verschieben, so dass wahlweise das Abladeförderband 13 oder die mindestens eine Siloeinheit 14 und somit die untere Förderbandeinheit 7 bzw. das Trassee mit dem Schüttgut beschickbar sind.
Die Siloeinheit 14 steht im Wesentlichen fest mit dem Rahmen 2 in Verbindung. Das Beschickungsförderband 12 ist selbst relativ zum Rahmen 2 und somit auch zur Siloeinheit 14 verschiebbar, wobei das Beschickungsförderband 12 mindestens teilweise oberhalb der Siloeinheit 14 liegt und über die Siloeinheit 14 bewegbar ist. Das Beschickungsförderband 12 liegt also im Bereich der Siloeinheit 14 über derselben. Im hinteren Bereich, also ausserhalb der Siloeinheit 14, kann das Beschickungsförderband auch unterhalb der Siloeinheit 14 liegen, so wie dies in der Figur 1 entsprechend dargestellt ist.

Die Siloeinheit 14 liegt zwischen dem Beschickungsförderband 12 und dem Abladeförderband 13.

Das Abladeförderband 13 ist von einer Ausgangsstellung zu einer Verschwenkstellung verschwenkbar. Hierfür ist das Abladeförderband 13 um eine winklig, insbesondere senkrecht, zur Rahmenebene R stehende Schwenkachse A2 in eine Verschwenkstellung verschwenkbar. In den Figuren 1 und 2 befindet sich das Abladeförderband 13 in der Verschwenkstellung. In der Ausgangsstellung liegt das Abladeförderband 13 innerhalb des Lichtprofils des Materialumschlagwagens in Längsrichtung L gesehen. Das Abladeförderband 13 erstreckt sich dahingegen in der Verschwenkstellung ausserhalb des Lichtraumprofils des Materialumschlagwagens 1. Das Lichtraumprofil definiert sich im Wesentlichen durch die Ausdehnung des Materialumschlagwagens 1 in Querrichtung Q.

Das Beschickungsförderband 12 und das Abladeförderband 13 stehen sowohl in der Ausgangsstellung als auch in der Verschwenkstellung geneigt bzw. winklig zur Rahmenebene R. Das Abladeförderband 13 weist in seinem hinteren Bereich, wo das Schüttgut auf das Abladeförderband 13 auftrifft, einen Rückhaltewand 19 auf, welcher verhindert, dass das Schüttgut nach hinten gegen die Siloeinheit 14 fallen kann.

Das Abladeförderband 13 steht mit einem Drehgelenk 20 mit dem Rahmen 2, insbesondere mit der Oberseite 3 des Rahmens 2, in Verbindung. Das Drehgelenk 20 ist dabei auf der Oberseite 3 des Rahmens 2 entsprechend gelagert.

Stirnseitig umfasst der Rahmen 2 Puffer 26 und Kupplungen 27, so dass der Materialumschlagwagen 1 mit anderen Eisenbahnwagen oder einer Lokomotive verbunden werden kann.

In den Figuren 3 und 4 wird der erfindungsgemässe Materialumschlagwagen 1 in der Transportstellung gezeigt. Die obere Förderbandeinheit 6 und die untere Förderbandeinheit 7 liegen dabei derart, dass diese innerhalb des Lichtraumprofils liegen und sich nicht über das Lichtraumprofil des Materialumschlagwagens 1 hinauserstrecken. Dies insbesondere bezüglich der Querrichtung Q. Vorzugsweise liegt das Förderband 8 und das Förderband 9 parallel zueinander und im Wesentlichen parallel zum Rahmen 2 bezüglich der Querrichtung Q. Auch das Abladeförderband 13 liegt in Längsrichtung L ausgerichtet auf dem Rahmen 2 und erstreckt sich nicht über das Lichtraumprofil bezüglich der Querrichtung in Längsrichtung L gesehen hinaus. In der in den Figuren 3 und 4 gezeigten Stellung kann der Materialumschlagwagen 1 in einem Bauzug zu einer Baustelle transportiert werden.

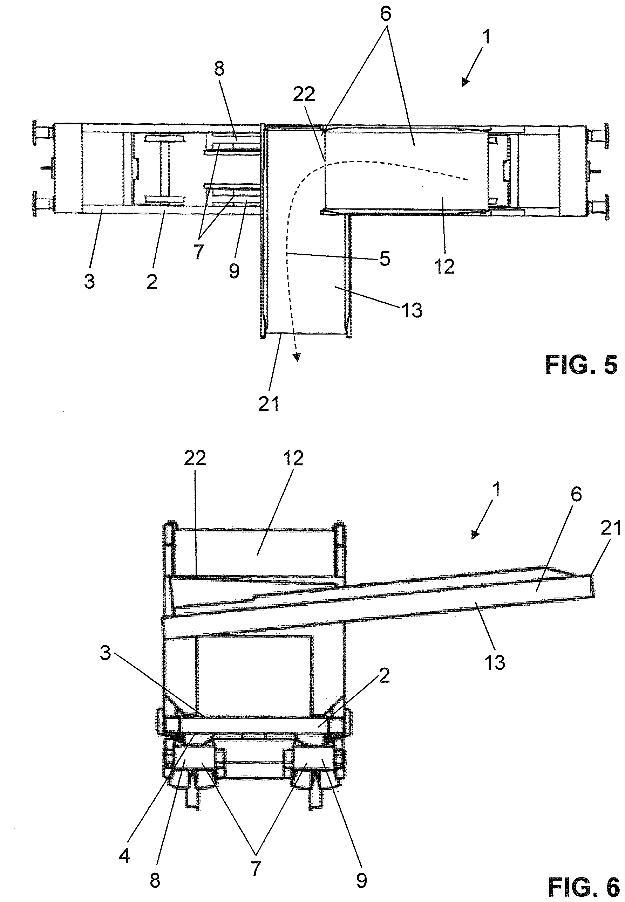

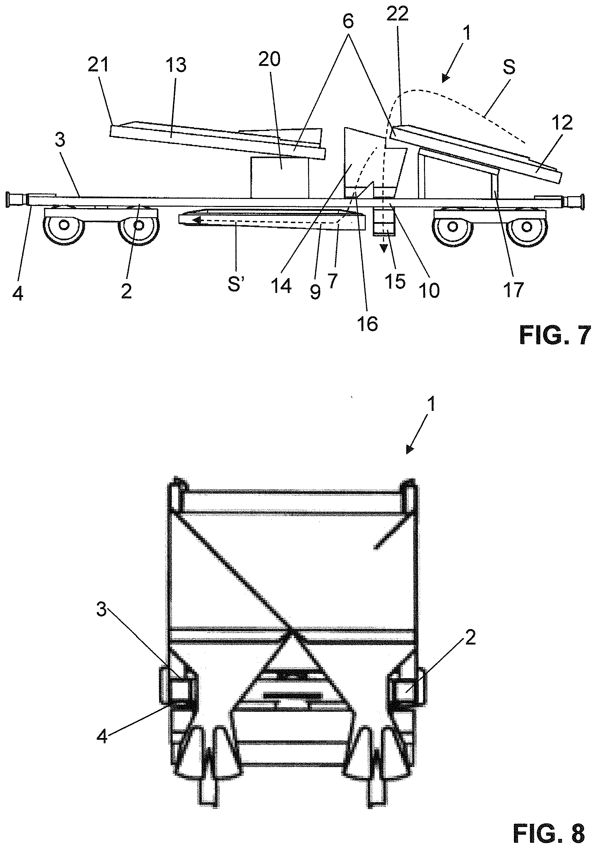

In den Figuren 5 und 6 wird der Materialumschlagwagen in einer ersten Konfiguration gezeigt. Es handelt sich hierbei um die Möglichkeit des Querablades von Schüttgut über das Abladeförderband 13. Das Abladeförderband 13 steht hier winklig, insbesondere rechtwinklig, zur Längsrichtung L und ragt über das Lichtraumprofil bezüglich der Querrichtung Q über den Rahmen 2 hinaus. Weiter ist das Beschickungsförderband 12 so weit nach vorne in Richtung des Abladeförderbandes 13 vorgeschoben, dass das Schüttgut vom Beschickungsförderband 12 auf das Abladeförderband 13 gelangt. Im Bereich der Übergabestelle liegt dabei das Abladeförderband 13 unterhalb des Beschickungsförderbandes 12. Das Schüttgut gelangt nun vom Beschickungsförderband 12 entlang der Pfeilrichtung S auf das Abladeförderband 13, wo das Schüttgut um den Winkel des Abladeförderbandes 13, im Wesentlichen also um 90°, umgelenkt wird. Vom Abladeförderband 13 wird das Schüttgut S weitergefördert und gelangt schliesslich zur Abwurfkante 21 des Abladeförderbandes 13. Das Schüttgut verlässt dabei das Abladeförderband 13 in Bereich der Abwurfkante 21. Die Abwurfkante 22 des Beschickungsförderbandes 12 liegt hier, wie bereits oben erwähnt, im Bereich des Abladeförderbandes 13. Mit der in der Figur 5 und 6 gezeigten Konfiguration kann also das Schüttgut quer zur Längsrichtung L abgeladen werden. Bspw. wird diese Konfiguration eingesetzt, wenn das Schüttgut auf einen Wagen auf einem benachbarten Gleis verladen werden muss oder wenn das Schüttgut auf ein Trassee, welches benachbart zum Trassee liegt, auf welchem der Materialumschlagwagen 1 steht, gefördert werden soll. In den Figuren 7 und 8 wird der Ablad des Schüttgutes auf das Trassee über die Siloeinheit 14 gezeigt. Das Beschickungsförderband 12 ist so positioniert, dass die Abwurfkante 22 oberhalb der Siloeinheit 14 steht. Das Abladeförderband 13 und die Förderbänder 8, 9 der unteren Förderbahneinheit 7 stehen dabei in der Ausgangsstellung. Das Schüttgut wird nun über das Beschickungsförderband 12 der Siloeinheit 14 zugeführt. In der Siloeinheit 14 sind entsprechende Schieber oder Klappen so gestellt, dass das Schüttgut über den Abgabeschacht 16 geführt wird. Über den Abgabeschacht 15, welcher frei liegt, wird dann das Schüttgut direkt in das Trassee gefüllt, auf welchem der Materialumschlagwagen 1 aufsteht. Der Pfeil S zeigt wiederum den Weg des Schüttgutes in dieser Konfiguration. Alternativ kann die Siloeinheit 14 aber auch derart eingestellt sein, dass das Schüttgut auf die Förderbänder 8, 9 in der Ausgangsstellung gelangt, wobei das Schüttgut dann durch die Förderbänder 8, 9 in Längsrichtung L gefördert wird. Dies wird durch den Pfeil S' dargestellt.

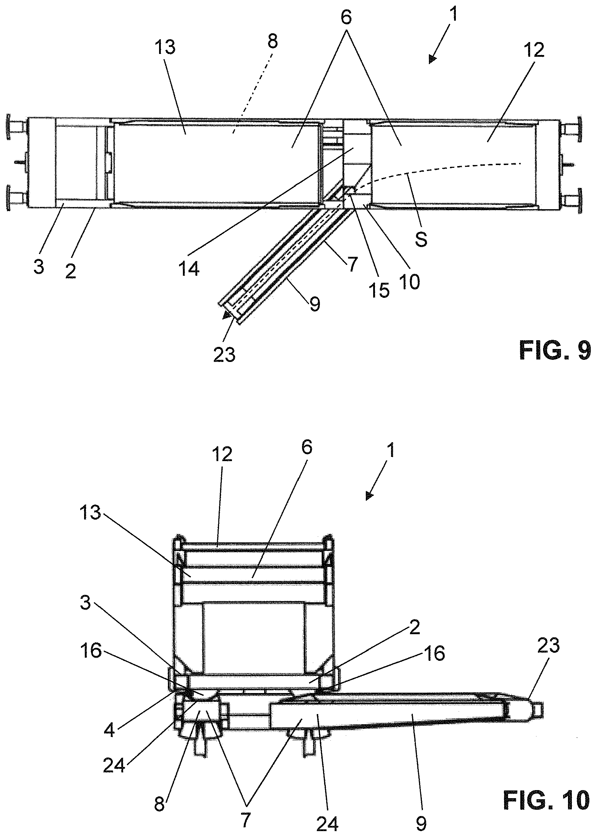

In den Figuren 9 und 10 wird eine weitere mögliche Konfiguration des Materialumschlagwagens 1 gezeigt. Hier ist eines der beiden Förderbänder 8, 9 der unteren Förderbandeinheit 7 seitlich ausgeschwenkt und liegt in einer Verschwenkstellung. Es handelt sich hierbei um das Förderband 9. Das Förderband 8 befindet sich in der Ausgangsstellung. Das Beschickungsförderband 12 bzw. die Siloeinheit sind so eingestellt, dass das Schüttgut über den Abgabeschacht 15 dem Förderband 9 zugeführt werden kann. Über entsprechende Schieber, die in den Figuren nicht dargestellt sind, wird sichergestellt, dass das Schüttgut nur zum Förderband 8 gelangt und nicht zum Förderband 9. In einer weiteren Konfiguration dieses Querablades, ist es auch denkbar, dass beide Förderbänder 8, 9 entsprechend ausgeschwenkt sind und das Schüttgut S in ein benachbartes Trassee zu dem Trassee abladen, auf welchem der Materialumschlagwagen 1 steht.

**BEZUGSZEICHENLISTE**

| | | | |
|---|---|---|---|
| 1 | Materialumschlagwagen | A1 | Schwenkachse |
| 2 | Rahmen | A2 | Schwenkachse |
| 3 | Oberseite | | |
| 4 | Unterseite | L | Längsrichtung |
| 5 | Laufwerke | Q | Querrichtung |
| 6 | obere Förderbahneinheit | X | Länge |
| 7 | untere Förderbahneinheit | R | Rahmenebene |
| 8 | Förderband | | |
| 9 | Förderband | | |
| 10 | Durchbruch | A1 | Schwenkachse |
| 12 | Beschickungsförderband | A2 | Achse |
| 13 | Abladeförderband | | |
| 14 | Siloeinheit | | |
| 15 | Abgabeschacht | | |
| 16 | Abgabeschacht | | |
| 17 | Trägerstruktur | | |
| 18 | Führungsschiene | | |
| 19 | Rückhaltewand | | |
| 20 | Drehgelenk | | |
| 21 | Abwurfkante | | |
| 22 | Abwurfkante | | |
| 23 | Abwurfkante | | |
| 24 | Beschickungsstelle | | |
| 25 | obere Öffnung | | |
| 26 | Puffer | | |
| 27 | Kupplungen | | |

## Patentansprüche

1. Materialumschlagwagen (1) für den Umschlag von Schüttgut, insbesondere von Schotter, umfassend
einen Rahmen (2), welcher Rahmen (2) sich in eine Längsrichtung (L) und eine Querrichtung (Q) ausdehnt und eine Rahmenebene mit einer Oberseite und einer Unterseite aufspannt,
mindestens zwei mit dem Rahmen (2) in Verbindung stehende Laufwerke (5), und eine obere Förderbahneinheit (6), welche oberseitig der Rahmenebene angeordnet ist, wobei der Materialumschlagwagen (1) eine untere Förderbahneinheit (7) umfasst, welche unterseitig der Rahmenebene (R) angeordnet ist,
wobei der Materialumschlagwagen (1) weiter mindestens eine Siloeinheit (14) umfasst,
**dadurch gekennzeichnet, dass**
die obere Förderbandeinheit (6) ein Beschickungsförderband (12) und mindestens ein Abladeförderband (13) umfasst, wobei das Beschickungsförderband (12) entlang der Längsrichtung (L) verschiebbar ist und so wahlweise das Abladeförderband (13) oder die mindestens eine Siloeinheit (14) beschickbar sind.

2. Materialumschlagwagen (1) nach Anspruch 1, **dadurch gekennzeichnet, dass** die untere Förderbahneinheit (7) mindestens ein Förderband (8, 9), vorzugsweise mindestens zwei, insbesondere genau zwei Förderbänder (8, 9), umfasst, welche von einer Ausgangsstellung um winklig, insbesondere senkrecht, zur Rahmenebene (R) stehende Schwenkachsen (A1) relativ zum Rahmen (2) in eine Verschwenkstellung verschwenkbar sind.

3. Materialumschlagwagen (1) nach Anspruch 2, **dadurch gekennzeichnet, dass** die Förderbänder (8, 9) der unteren Förderbandeinheit (7) zusätzlich zur Unterseite (4) der Rahmenebene (R) verschwenkbar sind.

4. Materialumschlagwagen (1) nach einem der Ansprüche 2 oder 3, **dadurch gekennzeichnet,**
**dass** sich die Förderbänder (8, 9) der unteren Förderbandeinheit (7) in ihrer Ausgangsstellung in Längsrichtung (L) erstrecken und um die besagten Schwenkachse derart verschwenkbar sind, dass die Förderbänder (8, 9) in der Verschwenkstellung winklig zur Längsrichtung (L) liegen; und/oder
**dass** bezüglich der Längsrichtung (L) jeweils ein Förderband (8) links am Rahmen (2) und ein anderes Förderband (9) rechts am Rahmen (2) angeordnet ist; und/oder
**dass** die Förderbänder (8, 9) der unteren Förderbahneinheit (7) in ihrer Länge (X) veränderbar ausgebildet sind.

5. Materialumschlagwagen (1) nach einem der Ansprüche 2 bis 4, **dadurch gekennzeichnet, dass** die Förderbänder (8, 9) in der Ausgangsstellung innerhalb des Lichtraumprofil des Materialumschlagwagens (1) bzw. des Rahmens (2) in Längsrichtung gesehen liegen und dass die Förderbänder (8, 9) in Verschwenkstellung ausserhalb des Lichtraumprofils liegen.

6. Materialumschlagwagen (1) nach einem der vorhergehenden Ansprüche, **dadurch gekennzeichnet, dass** die mindestens eine Siloeinheit (14) mindestens ein Abgabeschacht (15, 16) umfasst, wobei die Siloeinheit (14) von der oberen Förderbahneinheit (6) beschickbar ist, oder dass die mindestens eine Siloeinheit (14) mindestens ein, vorzugsweise mindestens zwei, in Längsrichtung (L) gesehen versetzt angeordnete Abgabeschächte (15, 16) umfasst, wobei die Siloeinheit (14) von der oberen Förderbahneinheit (6) beschickbar ist und wobei einer der Abgabeschächte (15) auf die untere Förderbahneinheit (7) gerichtet ist und wobei der andere der Abgabeschächte (16) direkt in Bereiche bzw. auf das Trassee unterhalb des Rahmens (2) mündet.

7. Materialumschlagwagen (1) nach Anspruch 6, **dadurch gekennzeichnet, dass** die Siloeinheit (14) eine Ablenkungselement, insbesondere eine Klappe, umfasst, welche das Schüttgut wahlweise in den einen oder den anderen der Abgabeschächte (15, 16) leitet.

8. Materialumschlagwagen (1) nach Anspruch 6 oder 7, **dadurch gekennzeichnet, dass** der Rahmen (2) einen Durchbruch (10) aufweist, durch welche sich die Siloeinheit (14), insbesondere die Abgabeschächte (15,16) von der Oberseite (3) des Rahmens (2) durch den Rahmen (2) hindurch erstrecken bzw. in welchen die Siloeinheiten (14, 15) von der Oberseite (3) des Rahmens münden.

9. Materialumschlagwagen (1) nach Anspruch 6 oder 7, **dadurch gekennzeichnet, dass** die Siloeinheit insgesamt vier Abgabeschächte (15, 16) umfasst, welche zueinander in Längsrichtung (L) und Querrichtung (Q) versetzt sind.

10. Materialumschlagwagen (1) nach einem der vorhergehenden Ansprüche, **dadurch gekennzeichnet, dass** die Siloeinheit (14) fest mit dem Rahmen (2) in Verbindung steht und dass das Beschickungsförderband (12) relativ zum Rahmen (2) verschiebbar ist, wobei das Beschickungsförderband (12) vorzugsweise mindestens teilweise oberhalb der Siloeinheit (14) liegt und über die Siloeinheit (14) hinweg bewegbar ist.

11. Materialumschlagwagen (1) nach einem der vorhergehenden Ansprüche, **dadurch gekennzeichnet, dass** die Siloeinheit (14) zwischen dem Beschickungsförderband (12) und dem Abladeförderband (13) liegen.

12. Materialumschlagwagen (1) nach einem der Ansprüche 9 bis 11, **dadurch gekennzeichnet, dass** das Abladeförderband (13) von einer Ausgangsstellung um eine winklig, insbesondere senkrecht, zur Rahmenebene (R) stehende Schwenkachse (A3) in eine Verschwenkstellung verschwenkbar ist, wobei das Abladeförderband (13) in der Ausgangsstellung innerhalb des Lichtraumprofil des Lichtprofils des Materialumschlagwagens (1) in Längsrichtung (L) gesehen liegt und wobei das Abladeförderband (13) in Verschwenkstellung ausserhalb des Lichtraumprofils liegt.

13. Materialumschlagwagen (1) nach einem der Ansprüche 9 bis 12, **dadurch gekennzeichnet, dass** das Beschickungsförderband (12) und das Abladeförderband (13) sowohl in Ausgangsstellung als auch in Verschwenkstellung geneigt zur Rahmenebene (R) stehen.

14. Materialumschlagwagen (1) nach einem der Ansprüche 8 bis 13, **dadurch gekennzeichnet, dass** das Abladeförderband (13) relativ zur Rahmenebene (R) verschwenkbar ist.

15. Verfahren zum Betrieb eines Materialumschlagwagens (1) nach einem der vorhergehenden Ansprüche, **dadurch gekennzeichnet,**
**dass** die untere Förderbandeinheit (7), insbesondere mindestens eines der Förderbänder (8, 9) derselben, für den Querablad von der Ausgangsstellung in die Verschwenkstellung verschwenkt werden, wobei die obere Förderbandeinheit den Schotter ggf. über die Siloeinheit der unteren Förderbandeinheit zuführt, oder wahlweise
**dass** die obere Förderbandeinheit (6) für den Querablad von der Ausgangsstellung in die Verschwenkstellung verschwenkt wird, wobei die untere Förderbandeinheit in der Ausgangsstellung verbleibt, oder wahlweise
**dass** die untere Förderbandeinheit (7) für den Längsablad von der Ausgangsstellung in die Verschwenkstellung verschwenkt wird oder in der Ausgangsstellung verbleibt, wobei die obere Förderbandeinheit (6) den Schotter ggf. über die Siloeinheit der unteren Förderbandeinheit (7) zuführt,
**dass** die Siloeinheit (14) mit der oberen Förderbandeinheit (6) beschickt wird und ohne Kontakt mit der unteren Förderbandeinheit gegen das Trassee gerichtet ist.

## Claims

1. A material transport carriage (1) for transporting bulk material, in particular ballast, comprising
a frame (2), which frame (2) extends in a longitudinal direction (L) and a transverse direction (Q) and spans a frame plane with an upper side and a lower side,
at least two drive units (5) which are in connection with the frame (2) and
an upper conveyor unit (6) which is arranged on the upper side of the frame plane,
wherein the material transport carriage (1) comprises a lower conveyor unit (7) which is arranged on the lower side of the frame plane (R),
wherein the material transport carriage (1) further comprises at least one silo unit (14), **characterized in that**
the upper conveyor belt unit (6) comprises a charging conveyor belt (12) and at least one unloading conveyor belt (13), wherein the charging conveyor belt (12) is displaceable along the longitudinal direction (L) and the delivery conveyor belt (13) or the at least one silo unit (14) can thereby be selectively charged.

2. The material transport carriage (1) as claimed in claim 1, **characterized in that** the lower conveyor unit (7) comprises at least one conveyor belt (8, 9), preferably at least two, in particular precisely two, conveyor belts (8, 9) which from a starting position are pivotable into a pivoted position relative to the frame (2) about swivel axes (A1) which are angled, in particular perpendicular, to the frame plane (R).

3. The material transport carriage (1) as claimed in claim 2, **characterized in that** the conveyor belts (8, 9) of the lower conveyor belt unit (7), in addition to the lower side (4) of the frame plane (R), are pivotable.

4. The material transport carriage (1) as claimed in one of claims 2 or 3, **characterized in that**
in their starting position, the conveyor belts (8, 9) of the lower conveyor belt unit (7) extend in the longitudinal direction (L) and can be pivoted about the said swivel axis, so that the conveyor belts (8, 9) are angled to the longitudinal direction (L) in the pivoted position; and/or
in relation to the longitudinal direction (L), a conveyor belt (8) is arranged to the left on the frame (2) and another conveyor belt (9) to the right on the frame (2); and/or
the conveyor belts (8, 9) of the lower conveyor unit (7) are designed such that their length (X) can be varied.

5. The material transport carriage (1) as claimed in one of claims 2 to 4, **characterized in that** in the starting position, the conveyor belts (8, 9) lie within the clearance gauge of the material transport carriage (1) or the frame (2), when viewed in the longitudinal direction, and that in the pivoted position the conveyor belts (8, 9) lie outside the clearance gauge.

6. The material transport carriage (1) as claimed in one of the preceding claims, **characterized in that** the at least one silo unit (14) comprises at least one delivery shaft (15, 16), wherein the silo unit (14) can be charged from the upper conveyor unit (6), or that the at least one silo unit (14) comprises at least one, preferably at least two, delivery shafts (15, 16) arranged offset when viewed in the longitudinal direction (L), wherein the silo unit (14) can be charged from the upper conveyor unit (6) and wherein one of the delivery shafts (15) is directed at the lower conveyor unit (7) and wherein the other of the delivery shafts (16) opens out directly into areas or onto the line below the frame (2).

7. The material transport carriage (1) as claimed in claim 6, **characterized in that** the silo unit (14) comprises a deflection element, in particular a flap, which conducts the bulk material into either one or other of the delivery shafts (15, 16).

8. The material transport carriage (1) as claimed in claim 6 or 7, **characterized in that** the frame (2) comprises a breakthrough (10) through which the silo unit (14), in particular the delivery shafts (15, 16), extend from the upper side (3) of the frame (2) through the frame (2) or in which the silo units (14, 15) open out from the upper side (3) of the frame.

9. The material transport carriage (1) as claimed in claim 6 or 7, **characterized in that** the silo unit comprises a total of four delivery shafts (15, 16) which are offset in relation to one another in a longitudinal direction (L) and transverse direction (Q).

10. The material transport carriage (1) as claimed in one of the preceding claims, **characterized in that** the silo unit (14) is fixedly in connection with the frame (2) and that the charging conveyor belt (12) is displaceable relative to the frame (2), wherein the charging conveyor belt (12) preferably lies at least partially above the silo unit (14) and is movable away over the silo unit (14).

11. The material transport carriage (1) as claimed in one of the preceding claims, **characterized in that** the silo unit (14) lies between the charging conveyor belt (12) and the unloading conveyor belt (13).

12. The material transport carriage (1) as claimed in one of claims 9 to 11, **characterized in that** the unloading conveyor belt (13) is pivotable from a starting position into a pivoted position about a swivel axis (A3) which is angled, in particular perpendicular, to the frame plane (R), wherein the unloading conveyor belt (13) lies within the clearance gauge of the material transport carriage (1) in the starting position, viewed in a longitudinal direction (L), and wherein the unloading conveyor belt (13) lies outside the clearance gauge in the pivoted position.

13. The material transport carriage (1) as claimed in one of claims 9 to 12, **characterized in that** the charging conveyor belt (12) and the unloading conveyor belt (13) are inclined to the frame plane (R), both in the starting position and also in the pivoted position.

14. The material transport carriage (1) as claimed in one of claims 8 to 13, **characterized in that** the unloading conveyor belt (13) is pivotable relative to the frame plane (R).

15. A method of operating a material transport carriage (1) as claimed in one of the preceding claims, **characterized in that**
the lower conveyor belt unit (7), in particular at least one of the conveyor belts (8, 9) of the same, is pivoted for cross-unloading from the starting position into the pivoted position, wherein the upper conveyor belt unit feeds the bulk material, possibly via the silo unit to the lower conveyor belt unit, or alternatively
**in that** the upper conveyor belt unit (6) is pivoted for cross-unloading from the starting position into the pivoted position, wherein the lower conveyor belt unit remains in the starting position, or alternatively
**in that** the lower conveyor belt unit (7) is pivoted for longitudinal unloading from the starting position into the pivoted position or remains in the starting position, wherein the upper conveyor belt unit (6) feeds the bulk material, possibly via the silo unit to the lower conveyor belt unit (7),
the silo unit (14) is charged using the upper conveyor belt unit (6) and directed towards the line without contact with the lower conveyor belt unit.

## Revendications

1. Chariot de transbordement de matériau (1) pour le transbordement de matériau en vrac, en particulier de gravier, comprenant
un châssis (2), lequel châssis (2) s'étend dans une direction longitudinale (L) et dans une direction transversale (Q) et définit un plan de châssis pourvu d'une face supérieure et d'une face inférieure,
au moins deux trains de roulement (5) se trouvant en liaison avec le châssis (2), et une unité de voie de convoyage supérieure (6), laquelle est disposée au-dessus du plan de châssis, où le chariot de transbordement de matériau (1) comprend une unité de voie de convoyage inférieure (7) laquelle est disposée au-dessous du plan de châssis (R),
où le chariot de transbordement de matériau (1) comprend en outre au moins une unité de silo (14), **caractérisé en ce que**
l'unité de voie de convoyage supérieure (6) comprend une bande de convoyage de chargement (12) et au moins une bande de convoyage de déchargement (13), où la bande de convoyage de chargement (12) peut être coulissée le long de la direction longitudinale (L) et ainsi la bande de convoyage de déchargement (13) ou l'au moins une unité de silo (14) peuvent être alimentées sélectivement.

2. Le chariot de transbordement de matériau (1) selon la revendication 1, **caractérisé en ce que** l'unité de voie de convoyage inférieure (7) comprend au moins une bande de convoyage (8, 9), préférablement au moins deux, en particulier exactement deux bandes de convoyages (8, 9), lesquelles peuvent être pivotées depuis une position de départ vers une position pivotée autour d'axes de pivotement (A1) orientés de manière à faire un angle, en particulier un angle droit, par rapport au plan de châssis (R).

3. Le chariot de transbordement de matériau (1) selon la revendication 2, **caractérisé en ce que** les bandes de convoyage (8, 9) de l'unité de voie de convoyage inférieure (7) peuvent en outre être pivotées par rapport à la face inférieure (4) du plan de châssis (R).

4. Le chariot de transbordement de matériau (1) selon l'une des revendications 2 ou 3, **caractérisé en ce**
**que** les bandes de convoyage (8, 9) de l'unité de voie de convoyage inférieure (7) s'étendent en direction longitudinale (L) dans leur position de départ et peuvent être pivotées autour du dit axe de pivotement de telle sorte que les bandes de convoyage (8, 9) se situent de manière à faire un angle par rapport à la direction longitudinale (L) dans la position pivotée ; et/ou
**que** par rapport à la direction longitudinale (L), respectivement une bande de convoyage (8) est disposée à gauche du châssis (2) et une autre bande de convoyage (9) est disposée à droite du châssis (2); et/ou
**que** les bandes de convoyage (8, 9) de l'unité de voie de convoyage inférieure (7) sont formées de manière à être changeables de longueur (X).

5. Le chariot de transbordement de matériau (1) selon une des revendications 2 à 4, **caractérisé en ce que** les bandes de convoyage (8, 9) se situent, vu en direction longitudinale, dans la position départ à l'intérieur du gabarit du chariot de transbordement de matériau (1) respectivement du châssis (2) et que les bandes de convoyage (8, 9) se situent en dehors du gabarit dans la position pivotée.

6. Le chariot de transbordement de matériau (1) selon une des revendications précédentes, **caractérisé en ce que** l'au moins une unité de silo (14) comprend au moins un conduit d'évacuation (15, 16), où l'unité de silo (14) peut être alimentée par l'unité de voie de convoyage supérieure (6), ou que l'au moins une unité de silo (14) comprend au moins un, préférablement au moins deux conduits d'évacuation (15, 16) disposés de manière décalée, vu en direction longitudinale (L), où l'unité de silo (14) peut être alimentée par l'unité de voie de convoyage supérieure (6) et/ou un des conduits d'évacuation (15) est orienté sur l'unité de voie de convoyage inférieure (7) et où l'autre des conduits d'évacuation (16) débouche directement sur des domaines, respectivement sur la tracé, en dessous du châssis (2).

7. Le chariot de transbordement de matériau (1) selon la revendication 6, **caractérisé en ce que** l'unité de silo (14) comprend un élément de déviation, en particulier un clapet, lequel dévie le matériau en vrac sélectivement dans l'un ou l'autre conduit d'évacuation (15, 16).

8. Le chariot de transbordement de matériau (1) selon la revendication 6 ou 7, **caractérisé en ce que** le châssis (2) présente une percée (10), à travers laquelle l'unité de silo (14), en particulier les conduits d'évacuations (15, 16) s'étendent depuis la face supérieure (3) du châssis (2) à travers le châssis (2), respectivement sur laquelle les unités de silo (14, 15) débouchent depuis la face supérieure (3) du châssis.

9. Le chariot de transbordement de matériau (1) selon la revendication 6 ou 7, **caractérisé en ce que** l'unité de silo comprend au total quatre conduits d'évacuation (15, 16), lesquels sont décalés l'un par rapport à l'autre en direction longitudinale (L) et direction transversale (Q).

10. Le chariot de transbordement de matériau (1) selon une des revendications précédentes, **caractérisé en ce que** l'unité de silo (14) est en liaison fixe avec le châssis (2) et que la bande de convoyage de chargement (12) peut être coulissée par rapport au châssis (2), où la bande de convoyage de chargement (12) se situe préférablement au moins partiellement au-dessus de l'unité de silo (14) et peut être déplacée au-delà de l'unité de silo (14).

11. Le chariot de transbordement de matériau (1) selon une des revendications précédentes, **caractérisé en ce que** l'unité de silo (14) se situe entre la bande de convoyage de chargement (12) et la bande de convoyage de déchargement (13).

12. Le chariot de transbordement de matériau (1) selon une des revendications 9 à 11, **caractérisé en ce que** la bande de convoyage de déchargement (13) peut être pivotée depuis une position de départ vers une position pivotée autour d'un axe de pivotement (A3) orienté de manière à faire un angle, en particulier un angle droit, par rapport au plan de châssis (R), où la bande de convoyage de décharge (13) se situe, vu en direction longitudinale (L), à l'intérieur du gabarit du profil lumineux du chariot de transbordement de matériau (1) dans la direction de départ, et où la bande de convoyage de décharge (13) se situe en dehors du gabarit dans la position pivotée.

13. Le chariot de transbordement de matériau (1) selon une des revendications 9 à 12, **caractérisé en ce que** la bande de convoyage de chargement (12) et la bande de convoyage de déchargement (13) sont inclinées par rapport au plan de châssis (R) dans la position de départ ainsi que dans la position pivotée.

14. Le chariot de transbordement de matériau (1) selon une des revendications 8 à 13, **caractérisé en ce que** la bande de convoyage de déchargement (13) peut être pivotée par rapport au plan de châssis (R).

15. Procédé pour l'opération d'un chariot de transbordement de matériau (1) selon une des revendications précédentes, **caractérisé en ce**
**que** l'unité de bande de convoyage inférieure (7), en particulier au moins une des bandes de convoyage (8, 9) de la même, est pivotée depuis la position de départ vers une position pivotée pour le déchargement transversal, où l'unité de bande de convoyage supérieure amène le gravier éventuellement par l'unité de silo de l'unité de bande de convoyage inférieure , ou sélectivement
**que** l'unité de bande de convoyage supérieure (6) est pivotée depuis la position de départ vers la position de pivotée pour la décharge transversale, où l'unité de bande de convoyage inférieure reste dans la position de départ, ou sélectivement
**que** l'unité de bande de convoyage inférieure (7) est pivotée depuis la position de départ vers la position pivotée pour la décharge longitudinale ou reste dans la position de départ, où l'unité de bande de convoyage supérieure (6) amène le gravier éventuellement par l'unité de silo de l'unité de bande de convoyage inférieure (7),
**que** l'unité de silo (14) est alimentée avec l'unité de bande de convoyage supérieure (6) et est orientée en direction du tracé sans contact avec l'unité de bande de convoyage inférieure.
